(19) **Europäisches Patentamt**

**European Patent Office**

**Office européen des brevets**

(11) Veröffentlichungsnummer: **0 357 668 B1**

(12) # EUROPÄISCHE PATENTSCHRIFT

(45) Veröffentlichungstag der Patentschrift:
04.09.91 Patentblatt 91/36

(21) Anmeldenummer: **88904174.5**

(22) Anmeldetag: **16.05.88**

(86) Internationale Anmeldenummer:
**PCT/AT88/00032**

(87) Internationale Veröffentlichungsnummer:
**WO 88/09492 01.12.88 Gazette 88/26**

(51) Int. Cl.⁵: **G01N 15/06**

(54) VERFAHREN UND EINRICHTUNG ZU BESTIMMUNG DES RUSSGEHALTES VON RAUCHGASEN.

(30) Priorität: **19.05.87 AT 1276/87**

(43) Veröffentlichungstag der Anmeldung:
**14.03.90 Patentblatt 90/11**

(45) Bekanntmachung des Hinweises auf die
Patenterteilung:
**04.09.91 Patentblatt 91/36**

(84) Benannte Vertragsstaaten:
**DE FR GB IT SE**

(56) Entgegenhaltungen:
**AT-A- 267 232
FR-A- 1 539 930
US-A- 4 023 930
Patent Abstracts of Japan, volume 10, No 60
(P-435) (2117), 11 March 1986 & JP, A,
60203837**

(73) Patentinhaber: **AVL Gesellschaft für
Verbrennungskraftmaschinen und
Messtechnik mbH.Prof.Dr.Dr.h.c. Hans List
Kleiststrasse 48
A-8020 Graz (AT)**

(72) Erfinder: **PFINGSTL, Max
Otto Loewigasse 14
A-8042 Graz (AT)**
Erfinder: **JASCHEK, Alfred, Otto
Pluddemanngasse 91a/218
A-8010 Graz (AT)**

(74) Vertreter: **Krause, Walter, Dr. Dipl.-Ing. et al
Postfach 200 Singerstrasse 8
A-1014 Wien (AT)**

# Beschreibung

Die Erfindung bezieht sich auf ein Verfahren zur Bestimmung des Rußgehaltes von Rauchgasen, insbesondere Abgasen von Brennkraftmaschinen, wobei durch das Abgas eine Beladung bzw. Schwärzung des durchströmten Filters hervorgerufen und sodann die Schwärzung des Filters gemessen wird, sowie auf eine Einrichtung zur Durchführung eines solchen Verfahrens.

Ein solches Verfahren bzw. eine entsprechende Einrichtung wurde z.B. durch die AT-PS 267232 bekannt. Bei dieser Einrichtung wird mit einer einen Arbeitszylinder aufweisenden Entnahmeeinrichtung jeweils eine konstante rauchgasmenge durch ein Filter hindurchgeleitet und danach dessen Schwärzung gemessen. Es müssen dabei Meßgeräte verwendet werden, die für einen größeren Meßbereich geeignet sind. Nachteiligerweise hängt die Meßgenauigkeit bei diesem Verfahren vom Rußgehalt des zu untersuchenden Rauchgases ab, da der gesamte Meßbreich dieser Meßgeräte keine gleichbleibende Empfindlichkeit aufweist.

Aus der JP-A-60203837 ist eine im wesentlichen dem Gegenstand der oben genannten AT-PS entsprechende Einrichtung bekannt, bei welcher ebenfalls eine konstante Rauchgasmenge zur Bestimmung des Rußgehaltes entnommen wird. Die Signale der Meßeinrichtung werden hier digitalisiert und einer Speichereinheit zugeführt. Aus mehreren Einzelmessungen wird dann ein Mittelwert errechnet. Die oben angeführten Nachteile treffen auch hier für die Einzelmessungen zu, sodaß auch der Mittelwert fehlerbehaftet ist.

Ein weiteres Verfahren zur Messung von Auspuffabgasen bzw. eine Einrichtung zur Ausführung dieses Verfahrens ist aus der DD-PS 127256 bekannt. Um unterschiedliche Weißgrade eines Papierfilterbandes an der Schwärzungsstelle und an einer Referenzstelle auszugleichen, wird hier das Papierfilterband entlang seiner Länge in zwei Bereiche unterteilt, von denen der eine laufend von den Proben beaufschlagt wird, während der danebenliegende frei bleibt und für die Vergleichsmessung benutzt wird. Die Entnahme der Rauchproben erfolgt quasikontinuierlich. Der photoelektrische Auswerter weist eine Blende mit zwei Öffnungen auf, von denen die eine auf eine vom Rauch beaufschlagte Stelle und die andere auf eine in gleichen Querstreifen liegende, nicht beaufschlagte Stelle des Papierfilterbandes gerichtet ist. Auch hier ist die Meßgenauigkeit aus den oben gennanten Gründen vom Rußgehalt des zu untersuchenden Rauchgases abhängig.

Ziel der Erfindung ist es, ein Verfahren der eingangs erwähnten Art vorzuschlagen, bei dem unabhängig vom Rußgehalt des zu untersuchenden Rauchgases die Meßgenauigkeit konstant bleibt.

Erfindungsgemäß wird dies dadurch erreicht, daß das pro Messung für die Filterbeladung herangezogene Abgasvolumen über einen entsprechenden Algorithmus aus dem Meßwert der Filterschwärzung einer vorhergehenden Prüfmessung bestimmt wird, wobei die Probenentnahme fortgesetzt wird, wenn die Filterschwärzung außerhalb eines definierten Bereiches liegt. Diese Verfahrensführung ermöglicht es, die zur Bestimmung der Schwärzung des Filters vorgesehenen Meßgeräte in einem vorgebaren Meßbereich einzusetzen, sodaß die Kennlinie dieser Geräte in die Messung praktisch nicht mehr eingeht.

Dabei ist es zweckmäßig, wenn im Bereich einer relativ starken Schwärzung gearbeitet wird, da in diesem Falle allfällige Unterschiede in der Helligkeit des Filtermaterials, z.B. eines Filterpapiers, keinen nennenswerten Einfluß auf das Meßergebnis haben.

Nach einem weiteren Merkmal der Erfindung kann das durch das Filter durchgeströmte Abgasvolumen gemessen und der resultierende Meßwert mit dem Meßwert für die Filterschwärzung in einem geeigneten Rechner derart miteinander verknüpft werden, daß ein Signal generiert wird, welches dem Rußgehalt im Abgas proportional ist. Dies ermöglicht eine sehr einfache Verfahrensführung mit der Möglichkeit einer Automatisierung des Verfahrensablaufes.

Zur zusätzlichen Erhöhung der Meßgenauigkeit können in Ausgestaltung der Erfindung Druck und-/oder Temperatur des das Filter durchströmenden Abgases gemessen und eine Druck- und/oder Temperaturkompensation des pro Messung durchgeströmten Abgasvolumens erfolgen.

In weiterer Ausgestaltung der Erfindung ist vorgesehen, daß nach einer ersten Probenentnahme die Schwärzung geprüft und automatisch ein neuer Probenaufnahme- und Meßzyklus ausgelöst wird, wenn die Filterschwärzung außerhalb eines definierten Bereiches liegt. Unter Verwendung eines Rechners kann diese Art des Verfahrens mit konventionellen Mitteln leicht verwirklicht werden.

Weiters kann auch vorgesehen sein, daß während der Probenentnahme die Filterschwärzung kontinuierlich durch mindestens einen Sensor geprüft wird und die Entnahme beendet wird, sobald die Filterschwärzung innerhalb eines definierten Bereiches liegt. Dies ermöglicht die Einsparung eines Verfahrensschrittes. Bei dieser Verfahrensführung wird praktisch die durch das Filter hindurchgeführte Rauchgasmenge in Abhängigkeit von einer groben, kontinuierliche Prüfmessung des Schwärzungsgrades gesteuert.

Erfindungsgemäß ist es auch möglich, daß bei jeder einzelnen Probenentnahme das gleiche Probenvolumen herangezogen und nach dem Durchsaugen jedes Einzelvolumens die Schwärzung geprüft wird, wobei die Entnahme beendet wird, sobald die Filterschwärzung innerhalb eines definierten Bereiches liegt, wobei ein bestimmtes Volumen mehrfach, z.B. intervallweise, durchgesaugt wird, bis ein gewisser Schwärzungsgrad erreicht ist.

Beispielsweise kann dabei die Probenentnahme bis zu einer Schwärzung von 20 bis 50% der absoluten Filterschwärzung fortgesetzt werden.

Zweckmäßig sind alle Verfahrensschritte und Abläufe automatisiert.

Ein weiteres Ziel der Erfindung ist es, eine Einrichtung zur Durchführung des erfindungsgemäßen Verfahrens anzugeben.

Durch die AT-PS 267232 wurde eine Einrichtung bekannt, bei der eine mit einem das zu untersuchende Rauchgas führenden Kanal verbundene Entnahmeleitung zu einer Entnahmeeinrichtung und einem Filter geführt ist, durch das ein taktweise vorschiebbares Band aus Filterpapier hindurchgeführt ist, das von einer Vorschubeinrichtung gesteuert ist und bei der eine photoelektrische Meßeinrichtung vorgesehen ist, durch die das Band aus Filterpapier hindurchführbar ist, wobei die Meßeinrichtung, in Vorschubrichtung des Filterbandes gesehen, nach dem Filter angeordnet ist.

Bei dieser bekannten Einrichtung ist das durch das Filter bei einer Messung hindurchführbare Volumen vorgegeben.

Ausgehend von einer solchen Einrichtung wird nach einem weiteren Merkmal der Erfindung vorgeschlagen, daß die Entnahmeeinrichtung, die eine gesteuerte Volums- oder Mengenmeß einrichtung aufweist, welche das rauchgas während des Durchströmens durch das Filter mißt, und die Meßeinrichtung für die Schwärzung des Filterpapiers mit einer Steuereinrichtung verbunden sind, die einen Rechner umfaßt, der nach einem Algorithmus aus der Schwärzung des Filterpapieres die für eine auswertbare Messung erforderliche Rauchgasmenge errechnet und die Entnahmeeinrichtung mit einem entsprechenden Signal versorgt. Bei dieser Einrichtung ist sichergestellt, daß vor der beabsichtigten Messung die für eine ausreichende Schwärzung erforderliche Rauchgasmenge errechnet wird. Dabei kann vorerst die mit einer vorgegebenen Rauchgasmenge erreichbare Schwärzung gemessen und nach dieser die für die Erreichung einer in vorgegebenen Grenzen liegende Schwärzung erforderliche Rauchgasmenge bestimmt werden. Dabei kann durch die Steuereinrichtung ein automatischer Ablauf der Messung sichergestellt werden, wobei das Filter mit einer bestimmten Rauchgasmenge beaufschlagt und danach in der Meßeinrichtung für die Schwärzung der Schwärzungsgrad in einer Prüfung bestimmt wird. Aus diesen Werten kann im Rechner der Steuereinrichtung die erforderliche Rauchgasmenge errechnet und bei einer neuerlichen Beaufschlagung des Filters, dann aber mit der für die Erreichung einer innerhalb der vorgegebenen Grenzen liegenden Schwärzung ausreichenden Rauchgasmenge, die Entnahmeeinrichtung entsprechend gesteuert werden.

Nach einem weiteren Merkmal der Erfindung kann aber auch vorgesehen sein, daß die Entnahmeeinrichtung, die eine gesteuerte Volums-oder Mengenmeßeinrichtung aufweist, welche das Rauchgas während des Durchströmens durch das Filter mißt, und die Meßeinrichtung für die Schwärzung des Filterpapiers mit einer Steuereinrichtung verbunden sind, und daß im Gehäuse des Filters eine zusätzliche photoelektrische Meßeinheit angeordnet ist, die mit der Steuereinrichtung verbunden ist, in der ein Komparator angeordnet ist, der die von der photoelektrischen Meßeinheit kommenden Signale mit einem vorgegebenen Wert vergleicht und der bei Erreichen des einstellbaren Schwellwertes ein die Entnahmeeinrichtung deaktivierendes Signal abgibt. Bei dieser Variante bleibt bei einer Messung die Zufuhr von Rauchgas zum Filter so lange aufrecht, bis eine für eine genaue Messung ausreichende Schwärzung des Filterbandes erreicht ist. Dies ermöglicht eine rasche und unkomplizierte Messung.

Für eine rasche, genaue Mengenmessung kann es dabei erfindungsgemäß vorgesehen sein, daß die Volums- oder Mengenmeßeinrichtung einen Drucksensor sowie eine im Abgasstrom angeordnete Blende aufweist, wobei beiderseits der Blende Druckmeßsensoren sowie im Bereich der Blende ein Temperatursensor angeordnet sind. Damit kann der Druck vor ($p_1$) und nach ($p_2$) der Blende gemessen werden und aus der Druckdifferenz $\Delta p = p_1 - p_2$, sowie aus $p_1$ oder $p_2$ und der bekannten Blendengoemetrie, unter Berücksichtigung der Temperatur T und der Dichte $\rho$, die Abgasmenge bestimmt werden.

Weiters kann vorgesehen sein, daß die Entnahmeeinrichtung über eine direkte Leitung und eine über das Filter führende Leitung mit dem Rauchgaskanal verbunden ist und diese Leitung wechselweise mit der Druck- oder Saugseite der Entnahmeeinrichtung verbindbar sind, wobei die Meßköpfe an beiden Seiten des Filterpapierbandes angeordnet sind. Dies ermöglicht es, das Rauchgas wahlweise durch das Filter zu saugen oder dieses durch das Filter zu drücken.

Dabei ist es vorteilhaft, wenn im Gehäuse des Filters zu beiden Seiten des Filterpapierbandes je eine photoelektrische Meßeinheit angeordnet ist, wodurch auf ein Ummontierten der Meßeinheiten bei einer Umstallung der Beaufschlagungsrichtung des Filters verzichtet werden kann.

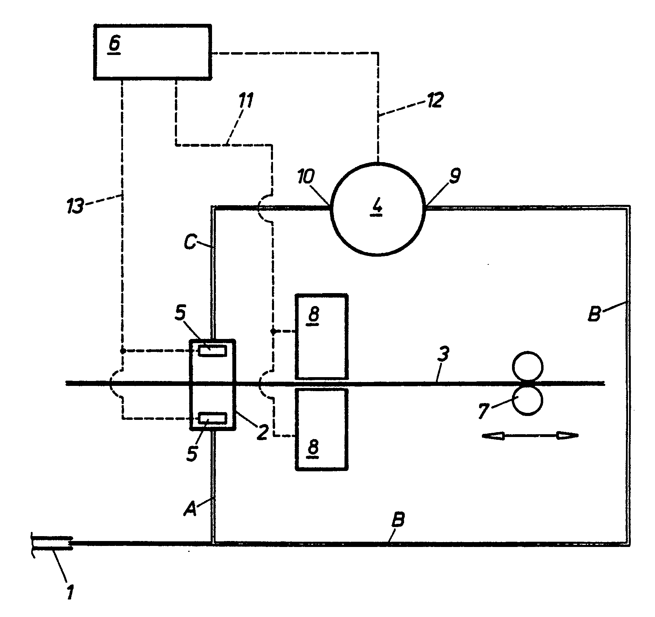

Die Erfindung wird nun anhand der Zeichnung, die schematisch eine Einrichtung zur Durchführung des erfindungsgemäßen Verfahrens zeigt, näher erläutert.

Das Rauchgas gelangt vom Rauchgaskanal 1 über eine Entnahmeleitung B zu der Entnahmeeinrichtung 4, wobei von der Entnahmeleitung B eine Meßleitung A abzweigt, die zu einem Filter 2 führt. Dieser Filter ist über eine Leitung C ebenfalls mit der Entnahmeeinrichtung 4 verbunden. Die mit den Leitungen B und C verbundenen Auslässe 9 und 10 der Entnahmeeinrichtung 4 können wahlweise im Saug- oder Druckbetrieb arbeiten, sodaß das Rauchgas durch das Filter gesaugt oder gedrückt werden kann.

Zur Mengenmessung kann die Entnahmeeinrichtung 4 eine im Abgasstrom angeordnete Blende aufweisen, wobei über vor und nach der Blende angeordnete Druckmeßsensoren und einen Temperatursensor die Abgasmenge in Abhängigkeit von $\Delta p$, p und T bestimmt wird.

Das Filter 2 selbst besteht im wesentlichen aus einem Gehäuse, durch das ein Filterband 3, das aus Filterpapier oder einem anderen Filtermaterial bestehen kann, hindurchführbar ist. Dabei ist für das Filterband 3 eine Antriebseinrichtung 7 vorgesehen, die zweckmäßigerweise von der Steuereinrichtung 6 gesteuert ist und das Filterband taktweise vorschiebt.

In Bewegungsrichtung des Filterbandes vom Filter 2 distanziert sind photoelektrische Meßeinrichtungen 8 zur Bestimmung der Schwärzung des Filterbandes angeordnet. Diese Meßeinrichtungen 8 sind ebenso wie die Entnahmeeinrichtung 4 mit der Steuereinrichtung 6 elektrisch über Leitungen 11 bzw. 12 verbunden, wobei die Steuereinrichtung der Schwärzung des Filterbandes entsprechende Signale, aber auch dem Volumen, der Temperatur und dem Druck der Rauchgase, letztere von der Entnahmeeinrichtung 4, erhält und auch Steuersignale an die Entnahmeeinrichtung 4 abgibt.

Weiters sind im Gehäuse des Filters 2 noch zu beiden Seiten des Filterbandes 3 photoelektrische Meßeinheiten 5 angeordnet, die ebenfalls mit der Steuereinrichtung über die Leitung 13 elektrisch verbunden sind. Die Anordnung der Meßeinheiten 5 und der Meßeinrichtungen 8 an beiden Seiten des Filterbandes 3 ermöglicht eine wahlweise Beaufschlagung des Filters 2 von beiden Seiten her.

Diese Einrichtung kann auf zwei Arten betrieben werden.

So kann vorerst eine bestimmte, vorgegebene Rauchgasmenge durch das Filter 2 hindurchgeleitet werden und danach das Filterband 3 durch die Antriebseinrichtung 7 um einen Schritt weiterbewegt werden, wodurch die vom Rauchgas geschwärzte Stelle des Filterbandes zur Prüfmessung in den Bereich der Meßeinrichtung 8 kommt. Aus den von diesen bzw. dieser Meßeinrichtung (en) 8, da nur eine, je nach der Richtung in der das Filter 2 durchströmt wird, aktiviert ist, gelieferten Signalen und der vorbestimmten Rauchgasmenge errechnet der Rechner der Steuereinrichtung 6 die für die Erreichung einer innerhalb der vorgegebenen Grenzen liegenden Schwärzung erforderliche Rauchgasmenge und gibt ein entsprechendes Signal an die Entnahmeeinrichtung 4 ab. Danach wird die Antriebseinrichtung 7 wieder angesteuert und zieht das Filterband um einen Schritt vor. Da nun das Filterband entsprechend geschwärzt ist, kann der Schwärzungsgrad sehr genau bestimmt werden.

Aus den von entsprechenden Fühlern und Meßeinrichtungen in der Entnahmevorrichtung 4 gelieferten, dem durch das Filter hindurchgeströmten Volumen der Rauchgase, deren Temperatur und Druck entsprechenden Signalen, kann der Rechner der Steuereinrichtung 6 auch den auf eine normierte Rauchgasmenge bezogenen Rußanteil errechnen.

Bei der zweiten Betriebsart wird die Schwärzung des Filterbandes 3 während des Durchströmens der Rauchgase durch das Filter 2 durch die photoelektrische Meßeinheit 5 erfaßt, wobei an die Genauigkeit dieser kontinuierlichen Prüfmessung keine besonderen Anforderungen gestellt werden. Ist ein bestimmter Schwärzungsgrad erreicht, so überschreiten die von dieser Einheit 5 gelieferten Signale einen von einem Komparator der Steuereinrichtung 6 überwachten Schwellenwert und dieser gibt ein die Entnahmeeinrichtung 4 deaktivierendes Signal ab, sodaß eine weitere Beaufschlagung des Filters 2 unterbleibt. Danach wird das Filterband 3 durch die Antriebseinrichtung 7 weitergezogen und gelangt zu den Meßeinrichtungen 8, wo der Schwärzungsgrad genau bestimmt wird.

Aus den der Schwärzung entsprechenden Signalen und den dem Volumen der durch das Filter hindurchgeströmten Rauchgase und deren Temperatur und Druck entsprechenden Signalen errechnet der Rechner der Steuereinrichtung 6 die Schwärungszahl oder die in einer normierten Rauchgasmenge enthaltene Rußmenge.

**Patentansprüche**

1. Verfahren zur Bestimmung des Rußgehaltes von Rauchgasen, insbesondere Abgasen von Brennkraftmaschinen, wobei durch das Abgas eine Beladung bzw. Schwärzung des durchströmten Filters hervorgerufen und sodann die Schwärzung des Filters gemessen wird, **dadurch gekennzeichnet**, daß das pro Messung für die Filterbeladung herangezogene Abgasvolumen über einen entsprechenden Algorithmus aus dem Meßwert der Filterschwärzung einer vorhergehenden Prüfmessung bestimmt wird, wobei die Probenentnahme fortgesetzt wird, wenn die Filterschwärzung außerhalb eines definierten Bereiches liegt.

2. Verfahren nach Anspruch 1, **dadurch gekennzeichnet**, daß das durch das Filter durchgeströmte Abgasvolumen gemessen und der resultierende Meßwert mit dem Meßwert für die Filterschwärzung in einem geeigneten Rechner derart miteinander verknüpft werden, daß ein Signal generiert wird, welches dem Rußgehalt im Abgas proportional ist.

3. Verfahren nach Anspruch 1 oder 2, **dadurch gekennzeichnet**, daß Druck und/oder Temperatur des das Filter durchströmenden Abgases gemessen und eine Druck- und/oder Temperaturkompensation des pro Messung durchgeströmten Abgasvolumens erfolgt.

4. Verfahren nach einem der Ansprüche 1 bis 3, **dadurch gekennzeichnet**, daß nach einer ersten Probenentnahme die Schwärzung geprüft und automatisch ein neuer Probenentnahme- und Meßzyklus ausgelöst wird, wenn die Filterschwärzung außerhalb eines definierten Bereiches liegt.

5. Verfahren nach einem der Ansprüche 1 bis 3, **dadurch gekennzeichnet**, daß während der Probenentnahme die Filterschwärzung kontinuierlich durch mindestens einen Sensor geprüft wird und die Entnahme beendet wird, sobald die Filterschwärzung innerhalb eines definierten Bereiches liegt.

6. Verfahren nach Anspruch 4, **dadurch gekennzeichnet**, daß bei jeder einzelnen Probenentnahme das gleiche Probenvolumen herangezogen und nach dem Durchsaugen jedes Einzelvolumens die Schwärzung geprüft wird, wobei die Entnahme beendet wird, sobald die Filterschwärzung innerhalb eines definierten Bereiches liegt, wobei ein bestimmtes Volumen mehrfach, z.B. intervallweise, durchgesaugt wird.

7. Verfahren nach einem der Ansprüche 1 bis 6, **dadurch gekennzeichnet**, daß die Probenentnahme bis zu einer Schwärzung von 20 bis 50% der absoluten Filterschwärzung fortgesetzt wird.

8. Einrichtung zur Durchführung des Verfahrens nach einem der Ansprüche 1 bis 4, 6 oder 7, bei der eine mit einem das zu untersuchende Rauchgas führenden Kanal verbundene Entnahmeleitung zu einer Entnahmeeinrichtung und einem Filter geführt ist, durch das ein taktweise vorschiebbares Band aus Filterpapier hindurchgeführt ist, das von einer Vorschubeinrichtung gesteuert ist und bei der eine photoelektrische Meßeinrichtung vorgesehen ist, durch die das Band aus Filterpapier hindurchführbar ist, wobei die Meßeinrichtung in Vorschubrichtung des Filterbandes gesehen, nach dem Filter angeordnet ist, **dadurch gekennzeichnet**, daß die Entnahmeeinrichtung (4), die eine gesteuerte Volums- oder Mengenmeßeinrichtung aufweist, welche das Rauchgas während des Durchströmens durch das Filter mißt, und die Meßeinrichtung (8) für die Schwärzung des Filterpapieres mit einer Steuereinrichtung (6) verbunden sind, die einen Rechner umfaßt, der nach einem Algorithmus aus der Schwärzung des Filterpapiers die für eine auswertbare Messung der Schwärzung erforderliche Rauchgasmenge errechnet und die Entnahmeeinrichtung mit einem entsprechenden Signal versorgt.

9. Einrichtung zur Durchführung des Verfahrens nach einem der Ansprüche 1 bis 3, 5, 6 oder 7, bei der eine mit einem das zu untersuchende Rauchgas führenden Kanal verbundene Entnahmeleitung zu einer Entnahmeeinrichtung und einem Filter geführt ist, durch das ein takweise vorschiebbares Band aus Filterpapier hindurchgeführt ist, das von einer Vorschubeinrichtung gesteuert ist und bei der eine photoelektrische Meßeinrichtung vorgesehen ist, durch die das Band aus Filterpapier hindurchgeführt ist, wobei die Meßeinrichtung in Vorschubrichtung des Filterbands gesehen, nach dem Filter angeordnet ist, **dadurch gekennzeichnet**, daß die Entnahmeeinrichtung (4), die eine gesteuerte Volums- oder Mengenmeßeinrichtung aufweist, welche das Rauchgas während des Druchströmens durch das Filter mißt, und die Meßeinrichtung (8) für die Schwärzung des Filterpapieres mit einer Steuereinrichtung (6) verbunden sind, und daß im Gehäuse des Filters (2) eine zusätzliche photoelektrische Meßeinheit (5) angeordnet ist, die mit der Steuereinrichtung (6) verbunden ist, in der ein Komparator angeordnet ist, der die von der photoelektrischen Meßeinheit kommenden Signale mit einem vorgegebenen Wert vergleicht und der bei Erreichen des einstellbaren Schwellwertes ein die Entnahmeeinrichtung deaktivierendes Signal abgibt.

10. Einrichtung nach Anspruch 8 oder 9, **dadurch gekennzeichnet**, daß die Volums- oder Mengenmeßeinrichtung einen Drucksensor sowie eine im Abgasstrom angeordnete Blende aufweist, wobei beiderseits der Blende Druckmeßsensoren sowie im Bereich der Blende ein Temperatursensor angeordnet sind.

11. Einrichtung nach Anspruch 8 oder 9, **dadurch gekennzeichnet**, daß die Entnahmeeinrichtung (4) über eine direkte Leitung (B) und eine über das Filter (2) führende Leitung (A) mit dem Rauchgaskanal (1) verbunden ist und diese Leitungen wechselweise mit der Druck- oder Saugseite der Entnahmeeinrichtung verbindbar sind, wobei die Meßköpfe (8) an beiden Seiten des Filterpapierbandes (3) angeordnet sind.

12. Einrichtung nach Anspruch 11, **dadurch gekennzeichnet**, daß im Gehäuse des Filters (2) zu beiden Seiten des Filterpapierbandes (3) je eine photoelektrische Meßeinheit (5) angeordnet ist.

## Claims

1. Process for determining the soot content of combustion gases, in particular the exhaust gases of internal combustion engines, which will form deposits on, i.e. blacken, the filter through which they are passed, this blackening of the filter being subsequently measured, characterised in that the volume of exhaust gas taken for each measurement for the loading of the filter is determined by means of a suitable algorithm from the measured value of the filter blackening in a previous test measurement, sampling being continued if the blackening of the filter is outside a specified range.

2. Process according to claim 1, characterised in that the exhaust gas volume passing through the filter, is measured and the resulting measured value is combined with the measured value for the blackening of the filter in a suitable computing device in such a way as to generate a signal proportional to the soot content in the exhaust gas.

3. Process according to claim 1 or 2 characterised in that the pressure and/or temperature of the exhaust gas passing through the filter is measured and the volume of exhaust gas passed through the filter during each measurement is compensated for pressure and/or temperature.

4. Process according to one of claims 1 to 3, characterised in that the blackening is examined after a first sampling, and another sampling and measuring cycle is initiated automatically if the blackening of the filter is outside a specified range.

5. Process according to one of the claims 1 to 3 characterised in that the filter blackening is continuously monitored during the sampling process by at least one sensor, and sampling is terminated as soon as the blackening of the filter lies within a specified range.

6. Process according to claim 4, characterised in that the same sample volume is used for each individual sample, and the blackening is checked after the passage of each individual volume, the sampling process being terminated as soon as the blackening of the filter is within a specified range, and a given volume being sucked through repeatedly, e.g. at intervals.

7. Process according to one of claims 1 to 6, characterised in that sampling is continued until a degree of blackening amounting to 20 to 50% of the absolute blackening of the filter is reached.

8. Device for implementation of the process according to one of claims 1 to 4, 6 or 7 in which a sampling line connected to a channel conveying the exhaust gas to be tested leads to a sampling device and a filter through which is passed a tape of filter paper, which is advanced step-wise and is controlled by a feed mechanism, and in which a photoelectric measuring device is provided, through which the tape of filter paper may be passed and which is located following the filter in the direction of tape advance, characterised in that the sampling device (4), which is provided with a controlled volume or quantity measuring device measuring exhaust gas as it passes through the filter, and the device (8) for measuring the blackening of the filter paper are coupled to a control device (6) comprising a computing element, which calculates from the blackening of the filter paper the volume of exhaust gas required for obtaining meaningful blackening measurement, using an algorithm, and delivers an appropriate signal to the sampling device.

9. Device for implementation of the process according to one of claims 1 to 3, 5, 6 or 7, in which a sampling line connected to a channel conveying the exhaust gas to be tested leads to a sampling device and a filter through which is passed a tape of filter paper, which is advanced step-wise and is controlled by a feed mechanism, and in which a photoelectric measuring device is provided, through which the tape of filter paper is passed and which is located following the filter viewed in the direction of tape advance, characterised in that the sampling device (4), which is provided with a controlled volume or quantity measuring device measuring the exhaust gas as it passes through the filter, and the device (8) for measuring the blackening of the filter paper are coupled to a control device (6), and that an additional photoelectric measuring unit (5) is provided in the housing of the filter (2), connected to the control device (6), in which is arranged a comparator comparing the signals arriving from the photoelectric measuring unit with a predetermined value, and which generates a signal de-activating the sampling device when a preset threshold value is reached.

10. Device according to claim 8 or 9, characterised in that the volume or quantity measuring device is provided with a pressure sensor as well as a gate located in the stream of exhaust gas, pressure-measuring sensors being situated on both sides of the gate and a temperature sensor also being placed in the area of the gate.

11. Device according to claim 8 or 9, characterised in that the sampling device (4) is connected to the exhaust gas channel (1) by means of a direct line (B) and a line (A) going via the filter (2), these lines being connectable alternately to the pressure side or suction side of the sampling device, and the measuring heads (8) being located on each side of the filter paper tape (3).

12. Device according to claim 11, characterised in that a respective photoelectric measuring unit (5) is installed in the housing of the filter (2) on each side of the filter paper tape (3).

## Revendications

1. Procédé pour déterminer la teneur en suies de fumées notamment de gaz d'échappement de moteurs à combustion interne, les gaz provoquant un chargement ou un noircissement du filtre qu'ils traversent, procédé selon lequel on mesure alors le noircissement du filtre, procédé caractérisé en ce que la mesure du chargement du filtre rapportée au volume de gaz d'échappement est déterminée suivant un algorithme correspondant à partir de la grandeur mesurée du noircissement du filtre provenant d'une mesure de contrôle précédente et on poursuit la prise d'échantillon si le noircissement du filtre se situe en dehors d'une plage déterminée.

2. Procédé selon la revendication 1, caractérisé en ce qu'on mesure le volume de gaz d'échappement ayant traversé le filtre et on combine la grandeur de mesure résultante à la grandeur de mesure du noircissement du filtre dans un calculateur approprié suivant une combinaison telle que l'on obtienne un signal proportionnel à la teneur en suies contenue dans les gaz d'échappement.

3. Procédé selon la revendication 1 ou 2, caractérisé en ce qu'on mesure la pression et/ou la température des gaz d'échappement traversant le filtre et on fait une compensation en pression et/ou en température du volume de gaz passé à chaque mesure.

4. Procédé selon l'une des revendications 1 à 3, caractérisé en ce qu'après une première prise d'échantillon, on contrôle le noircissement et on déclenche automatiquement un nouveau cycle de prise d'échantillon et de mesure si le noircissement du filtre se situe en dehors d'une plage déterminée.

5. Procédé selon l'une des revendications 1 à 3, caractérisé en ce que pendant la prise d'échantillon, on vérifie le noircissement du filtre, en continu à l'aide d'au moins un capteur et on termine la prise dès que le noircissement du filtre se situe dans une plage déterminée.

6. Procédé selon la revendication 4, caractérisé en ce que pour chaque prise d'échantillon séparée, on utilise le même volume d'échantillon et après avoir aspiré chaque volume séparé, on vérifie le noircissement, on termine la prise dès que le noircissement du filtre se situe dans une plage déterminée, un volume déterminé étant aspiré plusieurs fois par exemple par intervalles.

7. Procédé selon l'une des revendications 1 à 6, caractérisé en ce que la prise d'échantillon se poursuit jusqu'à un noircissement de 20 à 50% du noircissement absolu du filtre.

8. Installation pour la mise en oeuvre du procédé selon l'une des revendications 1 à 4, 6 ou 7 dans laquelle une conduite de prise reliée à un canal dans lequel passent les fumées à examiner, est reliée à une installation de prélèvement et à un filtre, ce dernier étant traversé par un papier-filtre dont la bande avance en cadence, en étant commandée par une installation d'avancée, et comportant une installation de mesure photo-électrique qui est traversée par la bande du papier-filtre, l'installation de mesure étant située en aval du filtre dans le sens de défilement de la bande formant le filtre, installation caractérisée en ce que l'installation de prélèvement (4) qui comporte une installation de mesure de volume ou de quantité de gaz d'échappement et l'installation de mesure (8) du noircissement du papier-filtre sont reliées à une installation de commande (6) qui comprend un calculateur calculant à partir d'un algorithme en partant du noircissement du papier-filtre, la quantité de fumées nécessaire pour réaliser une mesure exploitable et fournissant un signal correspondant à l'installation de prise.

9. Installation pour la mise en oeuvre du procédé selon l'une des revendications 1 à 3, 5, 6 ou 7 dans laquelle la conduite de prise reliée au canal traversé par les fumées à examiner est reliée à une installation de prélèvement et à un filtre, filtre traversé par un ruban de papier-filtre qui avance pas à pas, et est commandé par une installation d'avancée et comportant une installation de mesure photo-électrique traversée par la bande de papier-filtre, l'installation de mesure étant située en aval du filtre dans le sens du défilement du papier-filtre, installation caractérisée en ce que l'installation de prélèvement (4) qui comporte une installation de mesure de volume et de quantité des fumées et une installation de mesure (8) du noircissement du papier-filtre sont reliées à une installation de commande (6) et ce que le boîtier du filtre (2) comporte une unité de mesure (5) photo-électrique supplémentaire qui est reliée à l'installation de commande (6) comportant un comparateur qui compare les signaux fournis par l'unité de mesure photo-électrique à une grandeur prédéterminée et lorsqu'il atteint un seuil réglable, émet un signal qui met au repos l'installation de prélèvement.

10. Installation selon la revendication 8 ou 9, caractérisée en ce que l'installation de mesure de volume ou de quantité comporte un capteur de pression ainsi qu'un diaphragme placé dans le flux des gaz d'échappement, et de part et d'autre du diaphragme se trouvent des capteurs de pression et un capteur de température dans la zone du diaphragme.

11. Installation selon la revendication 8 ou 9, caractérisée en ce que l'installation de prélèvement (4) est reliée à un canal de fumées (1) par une conduite directe (B) et par une conduite (A) passant par le filtre (2) et ces conduites sont susceptibles d'être reliées en alternance au côté d'aspiration et au côté de pression de l'installation de prélèvement, les têtes de mesure (8) étant prévues des deux côtés de la bande de papier-filtre (3).

12. Installation selon la revendication 11, caractérisée en ce que les deux côtés de la bande de papier-filtre (3), il est prévu dans le boîtier du filtre (2), chaque fois, une installation de mesure photo-électrique (5).